# EUROPÄISCHE PATENTSCHRIFT

(11) **EP 3 717 202 B1**
(45) Veröffentlichungstag und Bekanntmachung des Hinweises auf die Patenterteilung: **31.08.2022**
(21) Anmeldenummer: 19702075.3
(22) Anmeldetag: 28.01.2019
(51) Int. Cl.: B29C 49/42, B29C 51/26

(54) **VORRICHTUNG ZUM ENTFERNEN VON KUNSTSTOFFERZEUGNISSEN**
DEVICE FOR REMOVING PLASTIC PRODUCTS
DISPOSITIF POUR ENLEVER DES PRODUITS EN PLASTIQUE

(30) Priorität: 03.02.2018 DE 102018000885
(43) Veröffentlichungstag der Anmeldung: 07.10.2020
(73) Patentinhaber: kocher-plastik Maschinenbau GmbH, 74429 Sulzbach-Laufen (DE)
(72) Erfinder: DORSCH, Tobias, 74423 Obersontheim (DE); HAID, Thomas, 74420 Oberrot (DE); JULINEK, Steffen, 74429 Sulzbach-Laufen (DE); KURZ, Martin, 74423 Obersontheim-Engelhofen (DE)
(74) Vertreter: Bartels und Partner, Patentanwälte
(86) Internationale Anmeldenummer: PCT/EP2019/051937
(87) Internationale Veröffentlichungsnummer: WO 2019/149641

(56) Entgegenhaltungen:
- EP-A1- 0 539 169
- WO-A1-2008/017481
- DE-A1-102008 011 772
- DE-A1-102013 007 954
- DE-U1-202012 004 015

## Beschreibung

Die Erfindung betrifft eine Vorrichtung zum Entfernen respektive Entformen von Kunststofferzeugnissen, wie beispielsweise Behältnissen, mit den Merkmalen im Oberbegriff von Anspruch 1.

Wenn Kunststofferzeugnisse mittels Kunststoff-Formgebungsverfahren industriell in großen Stückzahlen hergestellt werden, stellt die maschinelle Handhabung der Kunststofferzeugnisse innerhalb des Herstellungsprozesses einen wichtigen, die rationelle und wirtschaftliche Durchführung begünstigenden Verfahrensschritt dar. Wie im Dokument DE 38 31 957 C1 offenbart, ist es diesbezüglich Stand der Technik, eine Vorrichtung der eingangs genannten Gattung im Rahmen eines nach dem bekannten bottelpack^{®}-System arbeitenden Verfahrens einzusetzen, bei dem aus plastifiziertem Kunststoffmaterial durch ein automatisiertes Formen (Blasen oder Vakuumformen), Füllen und Verschließen Behälter auf wirtschaftliche Art und Weise hergestellt werden. Wie in dem genannten Dokument in Spalte 2, Zeilen 61 ff. ausgeführt ist, sind als Führungs- und Halteeinrichtung Stifte vorgesehen, die mittels einer Bewegungseinrichtung mit sacklochartigen Vertiefungen in Eingriff kommen, die in einer Abfallrandzone der hergestellten Ampullenblöcke ausgebildet sind, um den jeweiligen Ampullenblock zu übernehmen und anschließend wieder freizugeben.

Die DE 20 2012 004 015 U1 beschreibt eine Vorrichtung zum Entfernen von Kunststofferzeugnissen mit mindestens einer Führungs- und/oder Halteeinrichtung, die im Rahmen eines Kunststoff-Formgebungsverfahrens in mindestens ein Kunststofferzeugnis ein- und wieder ausgebracht ist, um dieses nach der Formgebung für mindestens einen weiteren Herstellschritt zu übernehmen bzw. anschließend freizugeben, wobei für das Ein- und Ausbringen der jeweiligen Führungs- und Halteeinrichtung in das bzw. aus dem jeweiligen Kunststofferzeugnis eine Bewegungseinrichtung dient, die die jeweilige Führungs- und Halteeinrichtung in gegenläufige Verfahrrichtungen axial verfährt, wobei mindestens eine weitere Bewegungseinrichtung vorhanden ist, die die jeweilige Führungs- und/oder Halteeinrichtung in eine Rotationsbewegung versetzt, wobei die Führungs- und Halteeinrichtung mindestens einen Stangenkörper aufweist, der ein freies Ende und im Bereich seines anderen freien Endes ein Ritzel für einen Ritzeltrieb als Teil der weiteren Bewegungseinrichtung sowie eine Drehlagerung aufweist.

Durch die WO 2008/017481 A1 ist eine Vorrichtung zum Entfernen von Kunststofferzeugnissen bekannt mit mindestens einer Führungs- und/oder Halteeinrichtung , die im Rahmen eines Kunststoff-Formgebungsverfahrens in mindestens ein Kunststofferzeugnis ein- und wieder ausgebracht ist, um dieses nach der Formgebung für mindestens einen weiteren Herstellschritt zu übernehmen bzw. anschließend freizugeben, wobei für das Ein- und Ausbringen der jeweiligen Führungs- und Halteeinrichtung in das bzw. aus dem jeweiligen Kunststofferzeugnis eine Bewegungseinrichtung dient, die die jeweilige Führungs- und Halteeinrichtung in gegenläufige Verfahrrichtungen axial verfährt und wobei mindestens eine weitere Bewegungseinrichtung vorhanden ist, die die jeweilige Führungs- und/oder Halteeinrichtung in eine Rotationsbewegung versetzt.

Durch die DE 10 2008 011 772 A1 ist eine Trennvorrichtung zum Abtrennen einzelner Behältererzeugnisse aus einem Rahmenverbund bekannt mit einer Stanzeinrichtung, die zumindest teilweise das jeweilige Behältererzeugnis von einem Rahmenabfall trennt, wobei sich mittels einer mit einem Elektromotor antreibbaren Gewindespindel für den Stanzvorgang sehr hohe Geschwindigkeiten erreichen lassen.

Des Weiteren ist durch die EP 0 539 169 B1 ein Verfahren zur Errichtung einer vorbestimmten Bezugsposition für nachfolgende Pressgrad-Entfernungen bei einem in einer Form hergestellten Artikel mit einem Umfangsgrad auf der Trennfläche von anschließenden Pressteilen bekannt, wobei das Verfahren die Schritte aufweist:
a) Vorsehen einer an den Grat angrenzenden Ambossoberfläche an einem bezüglich der Pressteile vorbestimmten Ort;
b) Verformung des Grates gegen die Ambossoberfläche, während er elastisch ist, um eine Bezugsoberfläche auf dem Grat zu bestimmen, von welcher die Bezugsposition errichtet wird; und
c) Kühlen des Artikels und des Grates, um beide zu erstarren.

Ferner ist eine Vorrichtung zum Durchführen eines solchen Verfahrens unter Einbezug von mittels einer solchen Vorrichtung herstellbaren thermoplastischen Artikeln offenbart.

Durch DE 10 2013 007 954 A1 ist ein Verfahren zum Umbördeln des Randes eines Kunststoffbechers bekannt, der in einer Thermoformmaschine mit einem Formwerkzeug durch Tiefziehen einer Kunststofffolie mit einem U-förmigen Rand hergestellt, ausgestanzt und aus diesem ausgeworfen wird, wobei er dabei von einem Aufnahmedorn aufgenommen, mit diesem zu einer Bördelmatrize geführt und dort im Zusammenwirken mit dieser während des nächsten Taktes der Thermoformmaschine umgebördelt wird.

Ausgehend von diesem Stand der Technik stellt sich die Erfindung die Aufgabe, eine Vorrichtung zur Verfügung zu stellen, die bei Beibehalten der Vorteile der genannten, bekannten Vorrichtungen einen besonders schnellen und sicheren Ablauf des Herstellvorganges von Kunststofferzeugnissen ermöglicht.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Stangenkörper an dem einen freien Ende einen Bohrerkopf aufweist. Dies ist mit Vorteil bei der maschinellen Handhabung von Ampullenblöcken einsetzbar, die nach dem oben erwähnten Blasform-, Füll- und Schliessverfahren (BFS-Verfahren) hergestellt sind und wie in Fig. 1 des genannten Dokumentes DE 38 31 957 C1 gezeigt, in ihrer Abfallrandzone sacklochartige Vertiefungen für den Eingriff von Stiften aufweisen. Beim Einsatz der erfindungsgemäßen Vorrichtung sind die Stifte durch die Bohrerspitzen der Stangenkörper gebildet, die bei der freigebenden Verfahrbewegung mittels des Ritzeltriebes in Drehung versetzt sind.

Es ist ferner vorgesehen, dass mindestens eine weitere Bewegungseinrichtung vorhanden ist, die die jeweilige Führungs- und/oder Halteeinrichtung in eine Rotationsbewegung versetzt. Dadurch, dass zusätzlich zu der Bewegungseinrichtung, die für die maschinelle Handhabung die Führungs- und Halteeinrichtung mit dem jeweiligen Kunststofferzeugnis in und außer Eingriff bringt, die Führungs- und Halteeinrichtung in Drehung versetzbar ist, kann der Vorgang des Entfernens respektive des Entformens, d.h. das Bewegen der Führungs- und Halteeinrichtung in der das Kunststofferzeugnis freigebenden Verfahrrichtung, bereits durchgeführt werden, bevor das Kunststofferzeugnis, das im Zuge des Kunststoff-Formgebungsverfahrens erhitzt ist, bereits vollständig abgekühlt ist. Die mittels der weiteren Bewegungseinrichtung erzeugte Rotationsbewegung verhindert auch bei noch teilweise im plastifizierten Zustand befindlichem und noch nicht vollständig ausgehärtetem Kunststofferzeugnis einen Anhaft- oder Verformungseffekt bei der rückziehenden Verfahrbewegung der Führungs- und Halteeinrichtung. Die schnellere Freigabe der Kunststofferzeugnisse ermöglicht dadurch die Durchführung des Kunststoff-Formgebungsverfahrens mit kürzeren Taktzeiten, so dass die erfindungsgemäße Vorrichtung die Durchführung des Kunststoff-Formgebungsverfahrens auf besonders schnelle und wirtschaftliche Weise ermöglicht.

Sofern von Ampullen die Rede ist, schließt dieser Begriff allgemein Behälter mit ein, insbesondere solche, die nach einem Blasform-, Füll- und Schließverfahren (BFS-Verfahren) hergestellt sind.

Bei Ausführungsbeispielen dieser Art ist eine Vielzahl von Stangenkörpern vorgesehen, die mit ihren Drehlagerungen immer paarweise in einer Drehaufnahme geführt sind und deren Ritzel innerhalb der Drehaufnahme einen vorgebbaren Axialabstand zueinander aufweisen, der vorzugsweise mindestens der Bauhöhe eines Ritzels entspricht. Durch die axial versetzte Anordnung der Ritzel eröffnet sich die vorteilhafte Möglichkeit, die Paare von Stangenkörpern in der Drehlagerung in einem Achsabstand anzuordnen, der geringer ist als der Ritzeldurchmesser, so dass in vorteilhafter Weise die Stangenkörper in dichterer Aufeinanderfolge voneinander angeordnet werden können.

Die Anordnung kann mit Vorteil so getroffen sein, dass die Drehaufnahmen an einem Träger als Teil der einen Bewegungseinrichtung angeordnet sind, der mittels eines Antriebs die Stangenkörper in Parallelanordnung zueinander in axialer Bewegungsrichtung unterhalb eines balkenartigen Absetztisches verfährt, der das Durchfahren der Stangenkörper sowie auf seiner Oberseite ein Absetzen des Kunststofferzeugnisses erlaubt zwecks Separieren desselben von den zuordenbaren Stangenkörpern.

Bei der axial versetzten Anordnung der Ritzel können als Ritzeltrieb für die einzelnen Ritzel der Stangenkörper zwei übereinander angeordnete Zahnstangen dienen, die Teil der weiteren Bewegungseinrichtung bilden und von denen eine Zahnstange das Ritzel des jeweils einen Stangenkörpers und die andere Zahnstange das Ritzel des jeweils weiteren Stangenkörpers betätigt, die zu einem Paar zusammengefasst in der jeweils zugehörigen Drehaufnahme des Trägers aufgenommen sind.

Beide Zahnstangen können auf einem Schlitten angeordnet sein, der mittels eines weiteren Antriebs entlang dem Träger bewegbar geführt ist.

Mit Vorteil können die beiden eingesetzten Antriebe, also der Antrieb für die vertikale Verfahrbewegungen der Stangenkörper und der horizontale Antrieb des Schlittens mit den Zahnstangen, aus Linearantrieben, insbesondere aus elektrischen Spindeltrieben, gebildet sein.

Der Bohrerkopf des jeweiligen Stangenkörpers kann aus einer Bohrspitze mit einem Bohrgewinde gebildet sein. Bei entsprechend gewählter Gewindesteigung ist bei der Drehbewegung im jeweiligen Sackloch des Kunststofferzeugnisse eine Axialkraftkomponente erzeugbar, die die freigebende Verfahrbewegung in der Art eines Ausschraubens begünstigt.

Mit besonderem Vorteil kann die Vorrichtung austauschbarer Bestandteil einer Blasform-, Füll- und Schließmaschine sein, mit der das jeweilige Kunststofferzeugnis hergestellt ist.

Wie in dem eingangs genannten Dokument gezeigt ist, kann das jeweilige Kunststofferzeugnis außerhalb eines gefüllten Behälterkörpers fußseitig einen kastenartigen Überstand als Abfallrandzone aufweisen, in den im noch weichen Zustand des Kunststoffmaterials die Stangenkörper mit ihrem jeweiligen Bohrkopf stoßartig eindringen, wobei mit oder nach dem Absetzen des jeweiligen Kunststofferzeugnisses auf dem Absetztisch unter Drehen der Stangenkörper diese aus dem Kunststoffmaterial des Überstandes ausgebracht sind.

Nachstehend ist die Erfindung anhand eines in der Zeichnung dargestellten Ausführungsbeispiels im Einzelnen erläutert. Es zeigen:
- Fig. 1: eine abgebrochen gezeichnete Vorderansicht eines Ausführungsbeispiels der erfindungsgemäßen Vorrichtung, wobei ein erster Betriebszustand gezeigt ist;
- Fig. 1a: eine vergrößert gezeichnete Teildarstellung des in Fig. 1 mit I bezeichneten Bereichs;
- Fig. 2: eine der Fig. 1 entsprechende Vorderansicht, wobei ein zweiter Betriebszustand gezeigt ist;
- Fig. 2a: eine vergrößerte Teildarstellung des in Fig. 2 mit II bezeichneten Bereichs;
- Fig. 3: eine der Fig. 1 entsprechende Vorderansicht, wobei ein dritter Betriebszustand dargestellt ist;
- Fig. 3a: eine vergrößert gezeichnete Teildarstellung des in Fig. 3 mit III bezeichneten Bereichs;
- Fig. 4: eine entsprechende Vorderansicht des Ausführungsbeispiels, wobei ein dritter Betriebszustand gezeigt ist;
- Fig. 4a: eine vergrößert gezeichnete Teildarstellung des in Fig. 4 mit IV bezeichneten Bereichs;
- Fig. 5: eine abgebrochen und teils auseinandergezogen gezeichnete perspektivische Schrägansicht eines Vorrichtungsteils des Ausführungsbeispiels der Vorrichtung, gesehen auf die Vorderseite;
- Fig. 6: ein im Maßstab von Fig. 5 und teilweise auseinandergezogen gezeichnete perspektivische Schrägansicht des Teils des Ausführungsbeispiels der Vorrichtung, gesehen auf die Rückseite; und
- Fig. 7: eine gegenüber Fig. 5 und 6 weiter vergrößert und schematisch vereinfacht gezeichnete Teilseitenansicht des Ausführungsbeispiels.

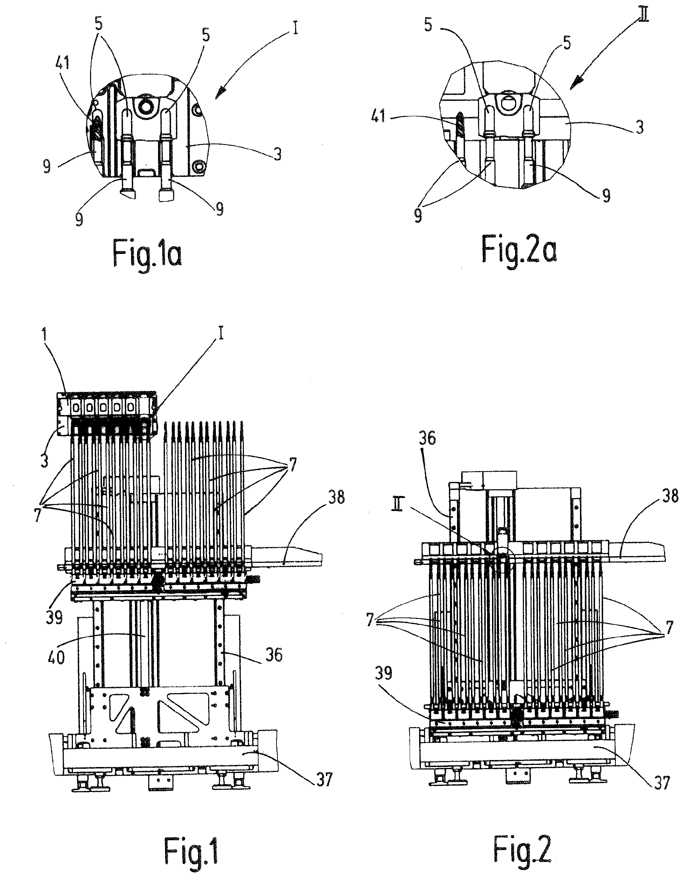

Unter Bezug auf die beigefügten Zeichnungen ist die Erfindung anhand eines Ausführungsbeispiels erläutert, das im Rahmen eines Kunststoff-Formgebungsverfahrens für die maschinelle Handhabung der im Formgebungsverfahren hergestellten Kunststofferzeugnisse vorgesehen ist. Genauer gesagt, ist das Ausführungsbeispiel dazu vorgesehen, um Ampullenblöcke, die in einem BFS-Verfahren hergestellt sind, von der Herstellform durch Eingriff einer Führungs- und Halteeinrichtung wegzubewegen und sodann durch Entfernen der in Eingriff befindlichen Führungs- und Halteeinrichtung die Kunststofferzeugnisse wieder freizugeben. Die Ampullenblöcke, von denen in der Zeichnung lediglich einer in Fig. 1 sichtbar und mit 1 bezeichnet ist, entsprechen einer bekannten Erzeugnisform, wie sie beispielsweise in dem genannten Dokument DE 38 31 957 C1 offenbart ist. Wie in der dortigen Fig. 1 gezeigt, weisen diese Ampullenblöcke außerhalb einer Reihe befüllter Behälterkörper fußseitig einen kastenartigen Überstand auf, der eine Abfallrandzone bildet und in dem sacklochartige Vertiefungen in Reihenanordnung vorgesehen sind, mit denen für den Transfervorgang stiftartige Eingriffsteile der Führungs- und Halteeinrichtung in Eingriff gelangen. In den Fig. 1a, 2a, 3a und 4a sind vom Ampullenblock 1 jeweils die den Überstand bildende Abfallrandzone mit 3 und die darin befindlichen sacklochartigen Vertiefungen mit 5 bezeichnet.

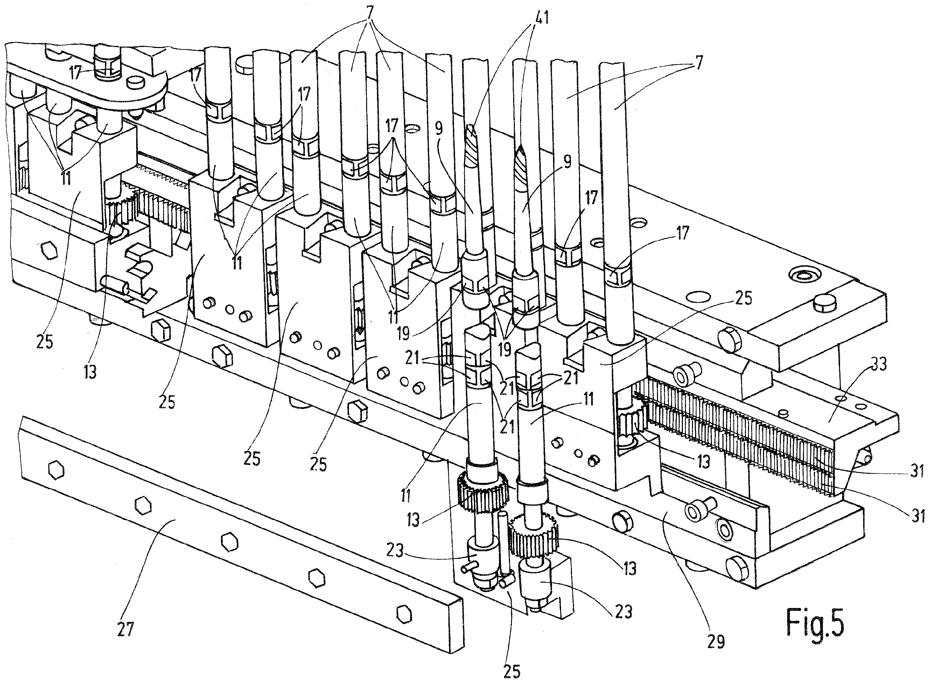

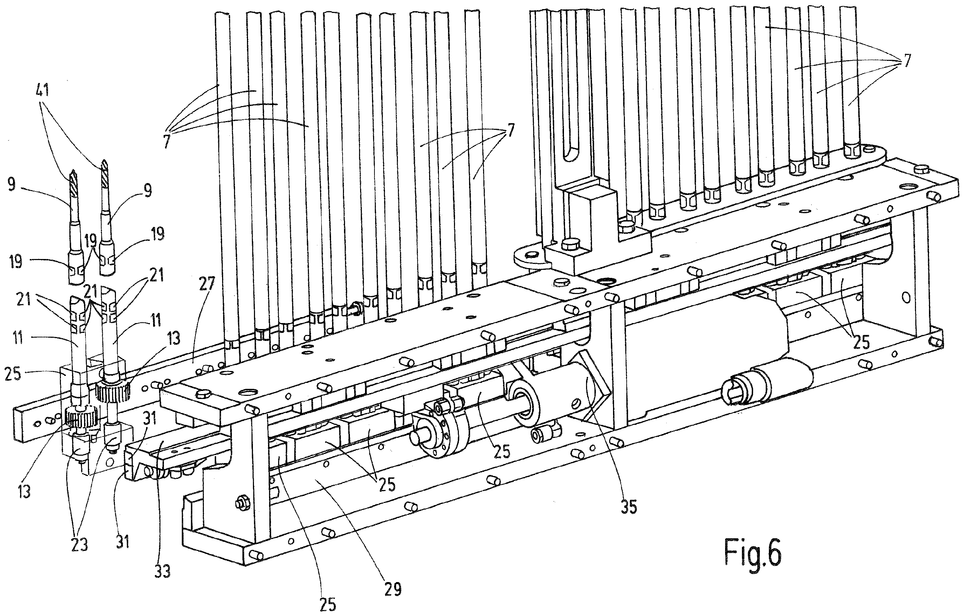

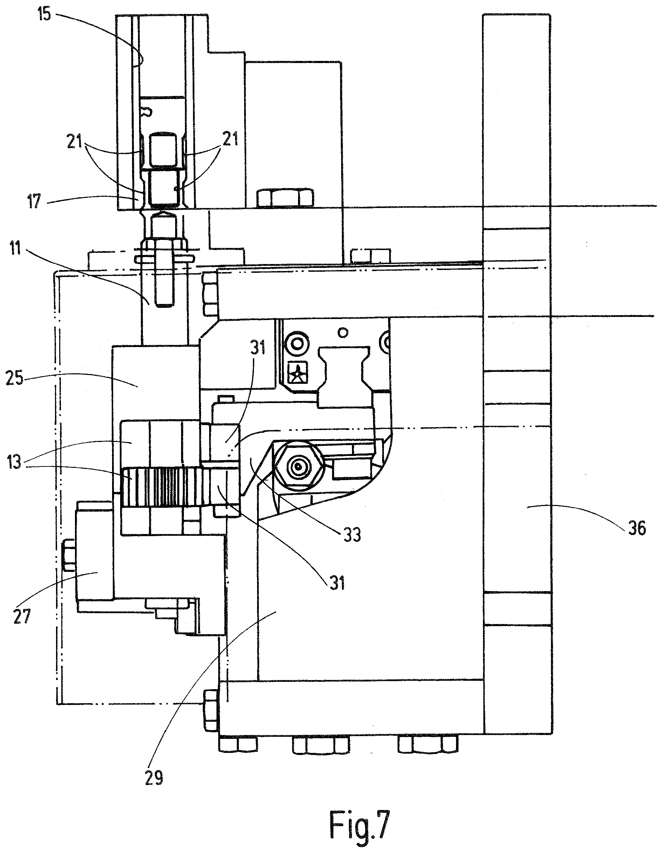

Die Führungs- und Halteeinrichtung weist Stangenkörper 7 auf, die in der Zeichnung nur teilweise beziffert und in Reihe angeordnet sind, wobei die Anzahl der Stangenkörper 7 der Anzahl der Sacklöcher 5 entspricht. Als Eingriffsteile für den stiftartigen Eingriff in die Sacklöcher 5 weist jeder Stangenkörper 7 an seinem freien Ende einen Bohrerkopf 9 auf. An dem dem Bohrerkopf 9 entgegengesetzten unteren Endabschnitt weisen die Stangenkörper 7 ein Wellenteil 11 mit jeweils einem darauf befestigten Zahnritzel 13 auf, s. Fig. 5 bis 7. Zwischen ihrem Bohrerkopf 9 und ihrem Wellenteil 11 weisen die Stangenkörper 7 ein langgestrecktes Verbindungsrohr 15 (s. Fig. 7) auf. In den Fig. 5 und 7 ist das untere Ende der Verbindungsrohre 15 jeweils mit 17 bezeichnet. Für die Verbindung der unteren Enden 17 mit einem jeweiligen Wellenteil 11 weisen diese in ihrem Endabschnitt jeweils Abflachungen 21 auf, mit denen, wie Fig. 7 zeigt, das Rohrende 17 der Verbindungsrohre 15 verbördelt ist. In entsprechender Weise sind die oberen Rohrenden der Verbindungsrohre 15 für die Verbindung mit den Bohrköpfen 9 mit Abflachungen 19 verbördelt, die am unteren Ende der Bohrköpfe 9 gebildet sind, wie Fig. 5 und 6 zeigen.

Die Wellenteile 11 mit ihren Ritzeln 13 sind mit Drehlagerungen 23 jeweils paarweise in einer blockartigen Drehaufnahme 25 gelagert. Diese sind mittels einer Halteleiste 27 an einem Träger 29 festgelegt. Wie Fig. 5 und 6 am deutlichsten zeigen, sind die Ritzel 13 bei jedem in einer Drehaufnahme 25 befindlichen Ritzelpaar in einem Axialabstand voneinander angeordnet, der etwas größer ist als die axiale Bauhöhe eines Ritzels 13. Dadurch können die Achsen der Wellenteile 11 und damit der Stangenkörper 7 in Abständen voneinander angeordnet werden, die kleiner sind als der Ritzeldurchmesser. Als Ritzeltrieb für den Drehantrieb der Stangenkörper 7 ist ein Paar Zahnstangen 31 vorgesehen, die übereinanderliegend an einem Schlitten 33 angebracht sind, der mittels eines Linearantriebs, beim vorliegenden Ausführungsbeispiel in Form eines elektromotorisch angetriebenen Spindeltriebes 35 (Fig. 6), entlang der Reihe der Ritzel 13 verschiebbar ist.

Wie die Fig. 1 bis 4 und am deutlichsten die Fig. 1 zeigen, weist die Vorrichtung einen Rahmen 36 auf, der sich, von einer bodenseitigen Grundstruktur 37 ausgehend, nach oben erstreckt und im oberen Bereich den Träger für einen horizontalen Absetztisch 38 bildet. Wie der Vergleich der Fig. 1 bis 4 zeigt, ist die gesamte aus Träger 29, Ritzeltrieb 31, Drehaufnahme 25 und Stangenkörpern 7 gebildete Stangeneinheit 39 am Rahmen 36 in beiden Verfahrrichtungen vertikal bewegbar, wobei bei der in Fig. 1 gezeigten, vollständig angehobenen Position die Stangenkörper 7 den Absetztisch 38 durchgreifen. Als Antrieb für diese Bewegungseinrichtung, die hier als erste Bewegungseinrichtung bezeichnet ist, während der die Rotation der Stangenkörper 7 erzeugende Ritzeltrieb 31 als zweite Bewegungseinrichtung bezeichnet ist, ist ebenfalls ein Linearantrieb vorgesehen, vorliegend ebenfalls in Form eines elektromotorisch betätigten Spindeltriebes 40 (Fig. 1).

Die Fig. 1 zeigt von einem Arbeitsspiel der Vorrichtung einen Betriebszustand, bei dem die Stangenkörper 7 in eine obere Endstellung verfahren sind, bei der sie, s. Fig. 1a, mit ihren Bohrerköpfen 9 in die Sacklöcher 5 eines jeweils zu transferierenden Ampullenblocks 1 eingestoßen sind, von denen der Übersichtlichkeit halber lediglich in Fig. 1 ein einzelner Ampullenblock 1 schematisiert angedeutet ist. Bei diesem Betriebszustand befindet sich der jeweilige Bohrerkopf 9 mit seiner durch ein Bohrgewinde 41 gebildeten Spitze in Eingriff mit den Sacklöchern 5 des noch vom Formgebungsverfahren erwärmten und daher im teilplastifizierten Zustand befindlichen Ampullenblock 1.

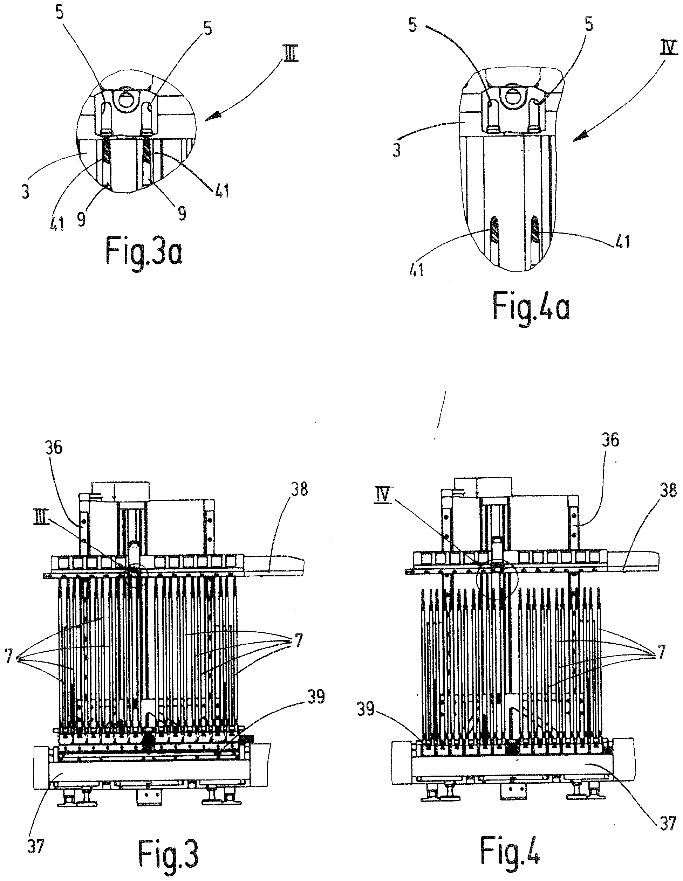

Die Fig. 2 zeigt den Betriebszustand des folgenden Arbeitsschrittes, bei dem die Stangenkörper 7 mit dem jeweiligen Ampullenblock 1 so weit nach unten verfahren sind, dass die betreffenden Ampullenblöcke 1 auf dem Absetztisch 38 aufliegen, jedoch die Bohrerköpfe 9 mit dem Bohrgewinde 41 noch in Eingriff mit den Sacklöchern 5 sind, wie in Fig. 2a gezeigt. Wie die Fig. 3 zeigt, bewegen sich die Stangenkörper 7 sodann weiter nach unten, während die Stangenkörper 7 in Drehung versetzt sind, so dass die Bohrerköpfe 9 mit den Bohrgewinden 41 in der Art einer Ausschraubbewegung aus den Sacklöchern 5 ausfahren, s. Fig. 3a.

Im Gegensatz zu der Fig. 1 wurde in den Fig. 2, 3 und 4 der Ampullenblock 1 der einfachen Darstellung wegen weggelassen, jedoch zeigen die Fig. 2a, 3a und 4a den jeweils zugehörigen Eingriffszustand zwischen Führungs- und Halteeinrichtung 7 und dem Ampullenblock 1 für die Unterseite einer Ampulle oder eines Behältnisses dieses Blocks 1.

Die Fig. 4 zeigt schließlich den Endzustand, bei dem die Stangenkörper 7 vollständig nach unten verfahren sind und die Ampullenblöcke 1 auf dem Absetztisch 38 vollständig freigegeben sind. Die Ausbildung der Bohrerköpfe 9 mit dem endseitigen Bohrgewinde 41, das in der eingestoßenen Position von dem noch warmen Kunststoffmaterial umschlossen ist, ermöglicht in Kombination mit der Drehbewegung ein störungsfreies Entfernen der die Führungs- und Halteeinrichtung bildenden Stangenkörper 7 aus dem Eingriff mit den Ampullenblöcken 1.

## Patentansprüche

1. Vorrichtung zum Entfernen von Kunststofferzeugnissen (1) mit mindestens einer Führungs- und/oder Halteeinrichtung, die im Rahmen eines Kunststoff-Formgebungsverfahrens in mindestens ein Kunststofferzeugnis (1) ein- und wieder ausgebracht ist, um dieses nach der Formgebung für mindestens einen weiteren Herstellschritt zu übernehmen bzw. anschließend freizugeben, wobei für das Ein- und Ausbringen der jeweiligen Führungs- und Halteeinrichtung in das bzw. aus dem jeweiligen Kunststofferzeugnis (1) eine Bewegungseinrichtung (40) dient, die die jeweilige Führungs- und Halteeinrichtung in gegenläufige Verfahrrichtungen axial verfährt, wobei mindestens eine weitere Bewegungseinrichtung (35) vorhanden ist, die die jeweilige Führungs- und/oder Halteeinrichtung (7) in eine Rotationsbewegung versetzt, wobei die Führungs- und Halteeinrichtung mindestens einen Stangenkörper (7) aufweist, der ein freies Ende und im Bereich seines anderen freien Endes ein Ritzel (13) für einen Ritzeltrieb (31) als Teil der weiteren Bewegungseinrichtung (35) sowie eine Drehlagerung (23) aufweist, **dadurch gekennzeichnet, dass** der Stangenkörper (7) an dem einen freien Ende einen Bohrerkopf (9) aufweist.

2. Vorrichtung nach Anspruch 1, **dadurch gekennzeichnet, dass** eine Vielzahl von Stangenkörpern (7) vorgesehen ist, die mit ihren Drehlagerungen (23) immer paarweise in einer Drehaufnahme (25) geführt sind und deren Ritzel (13) innerhalb der Drehaufnahme (25) einen vorgebbaren Axialabstand zueinander aufweisen, der vorzugsweise mindestens der Bauhöhe eines Ritzels (13) entspricht.

3. Vorrichtung nach Anspruch 1 oder 2, **dadurch gekennzeichnet, dass** die Drehaufnahmen (25) an einem Träger (29) als Teil der einen Bewegungseinrichtung angeordnet sind, die mittels eines Antriebs (40) die Stangenkörper (7) in Parallelanordnung zueinander in axialer Bewegungsrichtung unterhalb eines balkenartigen Absetztisches (38) verfährt, der das Durchfahren der Stangenkörper (7) sowie auf seiner Oberseite ein Absetzen des Kunststofferzeugnisses (1) erlaubt zwecks Separieren desselben von den zuordenbaren Stangenkörpern (7).

4. Vorrichtung nach einem der vorstehenden Ansprüche, **dadurch gekennzeichnet, dass** als Ritzeltrieb für die einzelnen Ritzel (13) der Stangenkörper (7) zwei übereinander angeordnete Zahnstangen (31) dienen, die Teil der weiteren Bewegungseinrichtung (35) bilden und von denen eine Zahnstange (31) das Ritzel des jeweils einen Stangenkörpers (7) und die andere Zahnstange (31) das Ritzel (13) des jeweils weiteren Stangenkörpers (7) betätigt, die zu einem Paar zusammengefasst in der jeweils zugehörigen Drehaufnahme (25) des Trägers (29) aufgenommen sind.

5. Vorrichtung nach Anspruch 4, **dadurch gekennzeichnet, dass** die beiden Zahnstangen (31) auf einem Schlitten (33) angeordnet sind, der mittels des weiteren Antriebs (35) entlang dem Träger (29) bewegbar geführt ist.

6. Vorrichtung nach Anspruch 5, **dadurch gekennzeichnet, dass** die eingesetzten Antriebe aus Linearantrieben, insbesondere aus elektrischen Spindeltrieben (35, 40) gebildet sind.

7. Vorrichtung nach einem der vorstehenden Ansprüche, **dadurch gekennzeichnet, dass** der Bohrerkopf (9) des jeweiligen Stangenkörpers (7) aus einer Bohrspitze mit einem Bohrgewinde (41) gebildet ist.

## Claims

1. Device for removing plastic products (1) having at least one guiding and/or holding device which is inserted into and removed from at least one plastic product (1) in the course of a plastic moulding process in order to accept or subsequently release it for at least one further manufacturing step after moulding, wherein a movement device (40) is used for the insertion and removal of the respective guiding and holding device into and out of the respective plastic product (1), which movement device moves the respective guiding and holding device axially in opposite directions of travel, wherein at least one further movement device (35) is present which sets the respective guiding and/or holding device (7) in a rotational motion, wherein the guiding and holding device comprises at least one rod body (7) which has one free end and, in the region of its other free end, a pinion (13) for a pinion drive (31) as part of the further movement device (35) and a rotary bearing (23), **characterised in that** the rod body (7) has a drill head (9) at the one free end.

2. Device according to claim 1, **characterised in that** a plurality of rod bodies (7) is provided which are always guided in pairs with their rotary bearings (23) in a rotary receptacle (25) and whose pinions (13) have a predefinable axial distance from each other within the rotary receptacle (25), which axial distance preferably corresponds to at least the overall height of a pinion (13).

3. Device according to claim 1 or 2, **characterised in that** the rotary receptacles (25) are arranged on a carrier (29) as part of the one movement device which, by means of a drive (40), moves the rod bodies (7) in parallel arrangement to each other in an axial direction of movement below a beam-like set-down table (38), which allows the bar bodies (7) to pass through and on its upper side allows the plastic product (1) to be set down for the purpose of separating the same from the assignable rod bodies (7).

4. Device according to one of the preceding claims, **characterised in that** two toothed racks (31) arranged one above the other serve as a pinion drive for the individual pinions (13) of the rod bodies (7), which racks form part of the further movement device (35) and one toothed rack (31) of which operates the pinion of the respective one rod body (7) and the other toothed rack (31) operates the pinion (13) of the respective further rod body (7), which racks, combined to form a pair, are accommodated in the respectively associated rotary receptacle (25) of the carrier (29).

5. Device according to claim 4, **characterised in that** the two toothed racks (31) are arranged on a sliding carriage (33) which is movably guided along the support (29) by means of the further drive (35).

6. Device according to claim 5, **characterised in that** the drives used are comprised of linear drives, in particular of electric spindle drives (35, 40).

7. Device according to one of the preceding claims, **characterised in that** the drill head (9) of the respective rod body (7) is comprised of a drill bit with a cutting thread (41).

## Revendications

1. Installation d'enlèvement de produits (1) en matière plastique comprenant au moins un dispositif de guidage et/ou de maintien, qui, dans le cadre d'un procédé de moulage de matière plastique est introduit dans au moins un produit (1) en matière plastique et en est ressorti pour, après le moulage, prendre en charge celui-ci pour au moins un autre stade de fabrication et ensuite le libérer, dans lequel, pour l'entrée et la sortie du dispositif respectif de guidage et de maintien dans le produit (1) respectif en matière plastique ou hors de celui-ci, est utilisé un dispositif (40) de mise en mouvement, qui déplace axialement, dans des sens de déplacement contraires, le dispositif respectif de guidage et de maintien, dans lequel il y a au moins un autre dispositif (35) de mise en mouvement, qui met le dispositif (7) respectif de guidage et/ou de maintien dans un mouvement de rotation, dans lequel le dispositif de guidage et de maintien a au moins une barre (7), qui a une extrémité libre, et dans la partie de son autre extrémité libre, un pignon (13) pour un engrenage (31) à pignon, comme partie de l'autre dispositif (35) de mise en mouvement, ainsi qu'un coussinet (23) de rotation, **caractérisée en ce que** la barre (7) a une tête (9) de foret à la une extrémité libre.

2. Installation suivant la revendication 1, **caractérisée en ce qu'**il est prévu une pluralité de barres (7), qui, par leurs coussinets (23) de rotation, sont guidées toujours par paires dans un logement (25) de rotation et dont les pignons (13) ont, à l'intérieur du logement (25) de rotation, une distance axiale les uns par rapport aux autres pouvant être donnée à l'avance, qui correspond de préférence au moins à la hauteur de construction d'un pignon (13).

3. Installation suivant la revendication 1 ou 2, **caractérisée en ce que** les logements (25) de rotation sont montés, comme parties du un dispositif de mise en mouvement sur une poutre (29), qui au moyen d'un entraînement (40) déplace les barres (7) suivant un agencement parallèle les unes par rapport aux autres dans une direction de mise en mouvement axiale en-dessous d'une table (38) de dépôt de type en poutre, qui permet le passage des barres (7) ainsi que, sur sa face supérieure, un dépôt du produit (1) en matière plastique en vue de séparer celui-ci des barres (7) pouvant lui être associées.

4. Installation suivant l'une des revendications précédentes, **caractérisée en ce que** l'on utilise, comme engrenage de pignon pour les divers pignons (13), des barres (7) de deux crémaillères (31) disposées l'une au-dessus de l'autre, qui forment une partie de l'autre dispositif (35) de mise en mouvement et dont une crémaillère (31) actionne le pignon d'une barre (7) respective et l'autre crémaillère (31) le pignon (13) de l'autre barre (7) respective, qui, rassemblées en une paire, sont reçues dans le logement (25) de rotation leur appartenant respectivement de la poutre (29) .

5. Installation suivant la revendication 4, **caractérisée en ce que** les deux crémaillères (31) sont montées sur un chariot (33), qui est guidé avec possibilité de se déplacer le long de la poutre (29) au moyen de l'autre entraînement (35).

6. Installation suivant la revendication 5, **caractérisée en ce que** les entraînements utilisés sont formés d'entraînements linéaires, notamment d'entraînements (35, 40) électriques à broche.

7. Installation suivant l'une des revendications précédentes, **caractérisée en ce que** la tête (9) de foret de la barre (7) respective est formée d'une pointe de foret ayant un filet (41) de foret.
